# EUROPÄISCHE PATENTSCHRIFT

(11) **EP 1 982 243 B1**
(45) Veröffentlichungstag und Bekanntmachung des Hinweises auf die Patenterteilung: **21.12.2011**
(21) Anmeldenummer: 06819205.3
(22) Anmeldetag: 31.10.2006
(51) Int. Cl.: G05B 19/042, G06F 9/445

(54) **VERFAHREN ZUM ABSPEICHERN EINES DATENBAUSTEINS MIT DATEN ZUM STEUERN EINES TECHNISCHEN PROZESSES SOWIE STEUERVORRICHTUNG**
METHOD FOR STORING A DATA BLOCK CONTAINING DATA FOR CONTROLLING A TECHNICAL PROCESS, AND CONTROL APPARATUS
PROCEDE POUR LE STOCKAGE D'UN BLOC DE DONNEES AVEC DES DONNEES POUR LA COMMANDE D'UN PROCESSUS TECHNIQUE ET DISPOSITIF DE COMMANDE

(30) Priorität: 06.02.2006 DE 102006005313
(43) Veröffentlichungstag der Anmeldung: 22.10.2008
(73) Patentinhaber: SIEMENS AKTIENGESELLSCHAFT, 80333 München (DE)
(72) Erfinder: DREBINGER, Andreas, 91074 Herzogenaurach (DE)
(86) Internationale Anmeldenummer: PCT/EP2006/067990
(87) Internationale Veröffentlichungsnummer: WO 2007/090474

(56) Entgegenhaltungen:
- DE-A1- 10 146 611
- US-A1- 2003 163 805
- US-A1- 2004 107 237

## Beschreibung

Die vorliegende Erfindung betrifft ein Verfahren zum Abspeichern eines Datenbausteins mit Daten zum Steuern eines technischen Prozesses in einem Speicherbereich einer Automatisierungsvorrichtung. Die vorliegende Erfindung betrifft ferner eine Steuervorrichtung zum Steuern des Abspeicherns des Datenbausteins und eine Automatisierungsvorrichtung.

Eine solche Automatisierungsvorrichtung enthält zum Steuern des technischen Prozesses üblicherweise einen Datenbaustein, in dem Funktionen, Parameter und sonstige Daten zum Durchführen von leittechnischen Abläufen festgelegt sind. Der Datenbaustein wird auch als Funktionsbaustein oder als Daten- oder Funktionsblock bezeichnet. Der Datenbaustein entspricht einem Automatisierungsprogramm oder -code für die Ablaufsteuerung in der Automatisierungsvorrichtung.

Bei einem Projektieren von leittechnischen Funktionen werden die gewünschten Automatisierungsfunktionen zum Steuern des technischen Prozesses in Form von grafischen Steuerungsblöcken zusammengestellt, parametriert und miteinander verschaltet. Die Steuerungsblöcke, die die Automatisierungsfunktionen repräsentieren, sind beispielsweise in einer speziellen Programm-Bibliothek enthalten, aus der heraus sie aufgerufen werden können. Die mit Parametern versorgten und verschalteten Steuerungsblöcke entsprechen einem Projektierungsprogramm, das anschließend einem Codegenerator zugeführt wird, der das Projektierungsprogramm kompiliert und in ein Format überführt, das von der Automatisierungsvorrichtung verstanden und verarbeitet werden kann. Das von dem Codegenerator erzeugte, kompilierte Projektierungsprogramm entspricht dem Datenbaustein. Dieser ist üblicherweise in eine Vielzahl von Datenbereichen unterteilt, in denen insbesondere Daten zusammengefasst sind, mit denen eine bestimmte Teil-Funktionalität ausführbar ist. Der erstellte und kompilierte Datenbaustein muss anschließend in die Automatisierungsvorrichtung geladen werden.

Üblicherweise wird ein neu erstellter Datenbaustein vollständig, d. h. insbesondere mit allen seinen Datenbereichen, über eine mit der Automatisierungsvorrichtung verbundene Kommunikationsleitung und einen geeigneten Kommunikationsdienst der Automatisierungsvorrichtung zugeführt und in dieser abgespeichert. Dies passiert normalerweise während des Betriebs der Automatisierungsvorrichtung, d. h. während diese den technischen Prozess mittels einem anderen, in ihr abgespeicherten Datenbaustein steuert. Dieser andere Datenbaustein soll anschließend durch den neuen, in die Automatisierungsvorrichtung geladenen Datenbaustein ersetzt werden. Da der Datenbaustein abhängig von der zugrunde liegenden Projektierung unter Umständen einen großen Datenumfang aufweisen kann, kann es zu langen Ladezeiten beim Übertragen des Datenbausteins in die Automatisierungsvorrichtung kommen.

In modernen Leittechniksystemen sind jedoch kurze Generier- und Ladezeiten, insbesondere während einer Inbetriebsetzung von technischen Anlagen, gefordert, um Änderungen in der Projektierung, und damit auch in dem daraus resultierenden Datenbaustein, möglichst schnell in der Automatisierungsvorrichtung, und der durch sie durchgeführten Steuerung des technischen Prozesses, wirksam werden zu lassen. Das schnelle Laden des Datenbausteins in die Automatisierungsvorrichtung wird ferner dadurch erschwert, dass zwischen einer Steuereinrichtung zum Steuern des Ladens des neuen Datenbausteins, d. h. einem sogenannten Applikationsserver, und der Automatisierungsvorrichtung mehrere Kommunikationskanäle auf der sie verbindenden Kommunikationsleitung aktiv sind. Über diese Kommunikationskanäle werden weitere Dienste abgewickelt, die für den laufenden Betrieb der Automatisierungsvorrichtung Prozesswerte, Alarme, etc., mit sehr kurzen Verzögerungszeiten bereitstellen müssen. Diese weiteren Dienste informieren über den aktuellen Zustand des Prozesses und nehmen geeignete Bedienbefehle entgegen. Diese weiteren Informations- und Bedienkanäle haben im Vergleich zu dem Projektierungskanal, der zum Übertragen des neuen Datenbausteins dient, eine wesentlich höhere Priorität. Für das Übertragen der Daten des neuen Datenbausteins steht somit nur eine begrenzte Bandbreite der Kommunikationsleitung zur Verfügung.

Die Druckschrift US 2004/0107237 A1 lehrt, bei einem derartigen Verfahren auf die Zuführung von Datenbereichen des herzustellenden neuen Datenbausteins an die Automatisierungsvorrichtung zu verzichten, die jeweils einem Datenbereich des bestehenden, zu ersetzenden Datenbausteins entsprechen.

Der vorliegenden Erfindung liegt die Aufgabe zugrunde, auf technisch einfache Weise ein Laden eines Datenbausteins in eine Automatisierungsvorrichtung zu ermöglichen.

Diese Aufgabe wird verfahrensseitig durch die technische Lehre des Anspruchs 1 und vorrichtungsseitig durch die technische Lehre des Anspruchs 7 gelöst. Vorteilhafte Ausgestaltungen der Erfindung können den abhängigen Ansprüchen entnommen werden.

Bei dem erfindungsgemäßen Verfahren zum Abspeichern eines ersten Datenbausteins mit Daten zum Steuern eines technischen Prozesses in einem ersten Speicherbereich einer Automatisierungsvorrichtung, wobei ein zweiter Datenbaustein mit Daten zum Steuern des technischen Prozesses in einem zweiten Speicherbereich der Automatisierungsvorrichtung abgespeichert ist und der erste Datenbaustein und der zweite Datenbaustein in mehrere Datenbereiche unterteilt sind, wird wenigstens ein Datenbereich, der Teil des ersten Datenbausteins ist, der Automatisierungsvorrichtung zugeführt. Der zugeführte erste Datenbaustein wird dann in dem ersten Speicherbereich abgespeichert. Wenigstens ein Datenbereich, der sowohl Teil des ersten Datenbausteins als auch Teil des zweiten Datenbausteins ist, wird ferner von dem zweiten Speicherbereich in den ersten Speicherbereich kopiert. Ferner wird ermittelt, welche Menge an Daten in einem der Datenbereiche enthalten ist, der sowohl Teil des ersten Datenbausteins als auch Teil des zweiten Datenbausteins ist, und es wird abhängig von der ermittelten Menge an Daten der Datenbereich entweder von dem zweiten Speicherbereich in den ersten Speicherbereich kopiert oder der Automatisierungsvorrichtung zugeführt und in dem ersten Speicherbereich abgespeichert.

Die erfindungsgemäße Steuervorrichtung zum Steuern eines Abspeicherns eines ersten Datenbausteins mit Daten zum Steuern eines technischen Prozesses in einem ersten Speicherbereich einer Automatisierungsvorrichtung, die in einem zweiten Speicherbereich einen zweiten Datenbaustein mit Daten zum Steuern des technischen Prozesses enthält, wobei der erste Datenbaustein und der zweite Datenbaustein in mehrere Datenbereiche unterteilt sind, ist so ausgestaltet, dass sie ein Zuführen wenigstens eines Datenbereichs, der Teil des ersten Datenbausteins ist, zu der Automatisierungsvorrichtung steuert. Des Weiteren veranlasst sie ein Kopieren wenigstens eines Datenbereichs, der sowohl Teil des ersten Datenbausteins als auch Teil des zweiten Datenbausteins ist, von dem zweiten Speicherbereich in den ersten Speicherbereich. Ferner ermittelt die erfindungsgemäße Steuervorrichtung, welche Menge an Daten in einem der Datenbereiche enthalten ist, der sowohl Teil des ersten Datenbausteins als auch Teil des zweiten Datenbausteins ist. Abhängig von der ermittelten Menge an Daten kopiert sie entweder den Datenbereich von dem zweiten Speicherbereich in den ersten Speicherbereich oder sie führt den Datenbereich der Automatisierungsvorrichtung zu und speichert ihn in dem ersten Speicherbereich ab.

Gemäß der vorliegenden Erfindung können vorteilhafterweise Ladezeiten zum Laden des ersten Datenbausteins in die Automatisierungsvorrichtung kurz gehalten werden. Ein bereits in der Automatisierungsvorrichtung vorhandener Datenbereich des zweiten Datenbausteins, der auch Teil des ersten Datenbausteins ist, muss nicht notwendigerweise noch einmal der Automatisierungsvorrichtung zugeführt werden. Vielmehr kann der bereits vorhandene Datenbereich innerhalb der Automatisierungsvorrichtung in den für den ersten Datenbaustein vorgesehenen ersten Speicherbereich kopiert werden. Ferner lässt sich auf einfache Weise feststellen, ob es effizienter ist, den wenigstens einen Datenbereich der Automatisierungsvorrichtung von außerhalb zuzuführen oder innerhalb der Automatisierungsvorrichtung umzukopieren.

Der erste Datenbaustein enthält dabei aktualisierte Daten, die zukünftig zum Steuern des Prozesses eingesetzt werden sollen. Der zweite Datenbaustein enthält momentan aktuelle Daten, die beispielsweise momentan zum Steuern des Prozesses verwendet werden. In dem ersten und dem zweiten Datenbaustein sind Funktionen, Parameter und sonstige Daten zum Durchführen von leittechnischen Abläufen, die von der Automatisierungsvorrichtung gesteuert werden, festgelegt. In den Datenbereichen, in die die Datenbausteine unterteilt sind, sind insbesondere Daten zusammengefasst, mit denen eine bestimmte Teil-Funktionalität beim Steuern des Prozesses mittels der Automatisierungsvorrichtung ausführbar ist. Die Datenbausteine stellen insbesondere einen Automatisierungscode dar, der die Ablaufsteuerung der Automatisierungsvorrichtung bestimmt. Der wenigstens eine Datenbereich des ersten Datenbausteins, der der Automatisierungsvorrichtung zugeführt wird, wird dieser insbesondere über eine Schnittstelle der Automatisierungsvorrichtung von außerhalb übermittelt. Dies ist insbesondere dann vorteilhaft, wenn dieser wenigstens eine Datenbereich des ersten Datenbausteins nicht Teil des zweiten Datenbausteins ist. Aufgrund der Erfindung ist es vorteilhafterweise möglich, die Anzahl der der Automatisierungsvorrichtung zuzuführenden Datenbereiche des ersten Datenbausteins gering zu halten. Dadurch wird eine Kommunikationsleitung, die zum Zuführen der Daten der Datenbereich dient, durch das Laden der Datenbereiche des ersten Datenbausteins sehr wenig belastet. Das Abspeichern oder Zusammenstellen des ersten Datenbausteins in dem ersten Speicherbereich der Automatisierungsvorrichtung oder das Belegen des ersten Speicherbereichs mit dem ersten Datenbaustein kann somit besonders schnell durchgeführt werden. Die Erfindung ist vor allem dann besonders effektiv, wenn das Kopieren des wenigstens einen bereits in der Automatisierungsvorrichtung vorhandenen Datenbereichs des zweiten Datenbausteins zeitlich effizienter durchführbar ist, als das Zuführen diese Datenbereichs von außerhalb. Auf seiten der Automatisierungsvorrichtung wird ein Dienst zur Verfügung gestellt, der das Kopieren wenigstens eines Datenbereichs zwischen zwei für zwei Datenbausteine vorgesehenen Speicherbereichen ermöglicht. Dieser Dienst ermöglicht es vorteilhafterweise ferner, dass dieses Kopieren zwischen unterschiedlichen Positionen innerhalb der Speicherbereiche und ein Einfügen des wenigstens einen zugeführten Datenbereichs an einer bestimmten Position in dem ersten Speicherbereich möglich ist. Es ist vorteilhafterweise möglich, die Erfindung besonders effizient zu realisieren, so dass eine zum Festlegen einer Sequenz zum Zuführen von mehreren Datenbereichen zu der Automatisierungsvorrichtung, und insbesondere auch zum Kopieren von Datenbereichen von dem zweiten in den ersten Speicherbereich, benötigte Rechenzeit sehr gering gehalten werden kann. Dieses Festlegen der Sequenz erfolgt insbesondere in der erfindungsgemäßen Steuervorrichtung.

In einer vorteilhaften Ausgestaltung der Erfindung wird überprüft, ob einer der Datenbereiche des ersten Datenbausteins auch Teil des zweiten Datenbausteins ist. Dies passiert vorteilhafterweise vor dem Zuführen des Datenbereichs zu der Automatisierungsvorrichtung. Dadurch kann automatisiert besonders schnell und zuverlässig festgestellt werden, ob der wenigstens eine Datenbereich notwendigerweise der Automatisierungsvorrichtung zugeführt werden muss oder ob er gegebenenfalls innerhalb der Automatisierungsvorrichtung in den ersten Speicherbereich kopiert werden kann.

Bevorzugt wird die ermittelte Menge an Daten mit einer Schwellwert-Datenmenge verglichen. Der Datenbereich wird dann von dem zweiten Speicherbereich in den ersten Speicherbereich kopiert, wenn die ermittelte Menge an Daten größer ist, als die Schwellwert-Datenmenge: Wenn die ermittelte Menge an Daten kleiner ist, als die Schwellwert-Datenmenge, wird der Datenbereich der Automatisierungsvorrichtung zugeführt und in dem ersten Speicherbereich abgespeichert. Dadurch kann vorteilhafterweise sichergestellt werden, dass die Kommunikationsressourcen zum Zuführen des Datenbereichs besonders effizient genutzt werden. Beim Festlegen der Schwellwert-Datenmenge kann insbesondere berücksichtigt werden, dass sowohl zum Zuführen als auch zum Kopieren des Datenbereichs Steuerdaten anfallen, die ebenfalls die Kommunikationsressourcen, und ebenfalls die Automatisierungsvorrichtung, belasten.

Des Weiteren vorzugsweise wird die Schwellwert-Datenmenge abhängig von einem ermittelten Zustand wenigstens einer Komponente festgelegt, die zum Abspeichern des ersten Datenbausteins und/oder zum Zuführen des wenigstens einen Datenbereichs des ersten Datenbausteins zu der Automatisierungsvorrichtung verwendet wird. Eine solche Komponente kann beispielsweise die erfindungsgemäße Steuervorrichtung oder eine Kommunikationsleitung sein, die zum Zuführen des wenigstens einen Datenbereichs eingesetzt wird. Dadurch kann die Schwellwert-Datenmenge besonders genau an eine aktuelle Systemumgebung der Automatisierungsvorrichtung, und insbesondere an diese selbst, angepasst werden. Die Schwellwert-Datenmenge kann besonders vorteilhaft automatisch ermittelt werden. Dazu können vor allem konkrete Messungen des aktuellen Zustands der wenigstens einen Komponente durchgeführt werden.

Besonders bevorzugt wird die Schwellwert-Datenmenge adaptiv festgelegt. Dadurch kann das Festlegen der Schwellwert-Datenmenge zunehmend genauer an die Zustände der wenigstens einen Komponente angepasst werden. Das Abspeichern oder Zusammenstellen der Datenbereiche des ersten Datenbausteins kann dadurch besonders effizient erfolgen.

Vorzugsweise wird vor dem Abspeichern des ersten Datenbausteins in dem ersten Speicherbereich der Automatisierungsvorrichtung das Kopieren des wenigstens einen Datenbereichs, der sowohl Teil des ersten Datenbausteins als auch Teil des zweiten Datenbausteins ist, und das Zuführen des wenigstens einen Datenbereichs, der Teil des ersten Datenbausteins ist, zu der Automatisierungsvorrichtung validiert. Das Festlegen der Sequenz zum Zuführen von Datenbereichen zu der Automatisierungsvorrichtung und zum Kopieren von Datenbereichen innerhalb der Automatisierungsvorrichtung kann somit zuvor auf eventuell auftretende Fehler überprüft werden. Das Abspeichern des ersten Datenbausteins kann somit unter Umständen abgebrochen oder erst gar nicht begonnen werden. Es wäre ebenso möglich, ein vollständiges Zuführen des ersten Datenbausteins mit allen Datenbereichen zu der Automatisierungsvorrichtung durchzuführen. Eine problematische Rückwirkung auf die Steuerung des Prozesses durch die im Betrieb befindliche Automatisierungsvorrichtung kann somit vorteilhafterweise vermieden werden. Die in der Sequenz enthaltenen Anweisungen können beispielsweise in einer bestimmten Automatisierungscode-Ladeeinrichtung verifiziert werden, indem Operationen zum Zuführen und Kopieren von Datenbereichen auf Basis von vorhandenen Daten simuliert werden.

Nachfolgend werden die Erfindung und ihre Vorteile anhand von Beispielen und Ausführungsbeispielen und der beigefügten Zeichnung näher erläutert. Es zeigen:
- Fig. 1: eine schematische Blockdarstellung eines Prozessleitsystems,
- Fig. 2: ein erstes Beispiel eines Abspeicherns eines Datenbausteins in einem Speicherbereich einer Automatisierungsvorrichtung,

- Fig. 3: ein zweites Beispiel eines Abspeicherns eines Datenbausteins,
- Fig. 4: ein drittes Beispiel eines Abspeicherns eines Datenbausteins und
- Fig. 5: ein viertes Beispiel eines Abspeicherns eines Datenbausteins.

In den Figuren sind nachfolgend gleiche oder funktionsgleiche Elemente - sofern nichts anderes angegeben ist - mit denselben Bezugszeichen versehen.

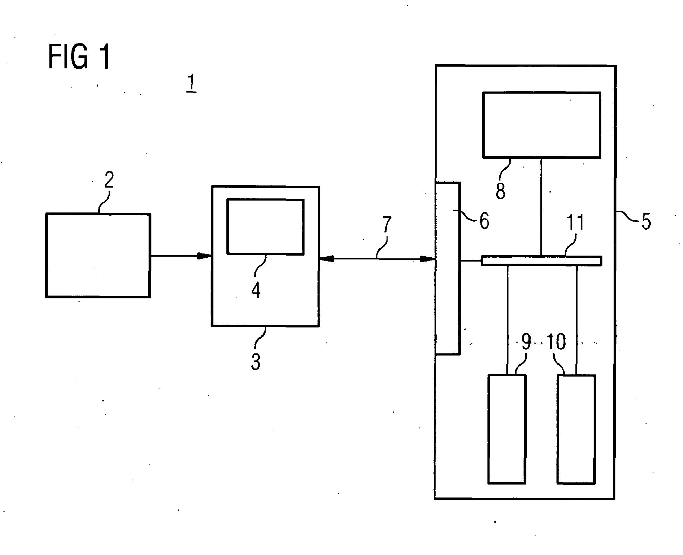

Fig. 1 zeigt eine schematische Blockdarstellung eines Prozessleitsystems 1 zum Steuern eines technischen Prozesses, der in einer Anlage ausgeführt wird. Eine solche Anlage kann beispielsweise eine Kraftwerksanlage oder eine chemische Anlage sein. Das Prozessleitsystem 1 enthält eine Projektierungseinrichtung 2, mit der leittechnische Funktionen zum Steuern des technischen Prozesses projektiert werden können. Dazu wird ein grafischer Funktionsplan erstellt, in dem gewünschte Automatisierungsfunktionen in Form grafischer Funktionsblöcke platziert, parametriert und miteinander verschaltet werden. Die Projektierungseinrichtung 2 weist u. a. eine grafische Bedienoberfläche und eine Programm-Bibliothek auf. Die Programm-Bibliothek enthält eine Vielzahl von Steuerungsblöcken, die die grafischen Funktionsblöcke repräsentieren. Die Steuerungsblöcke werden beim Projektieren aus der Programm-Bibliothek aufgerufen, verschaltet und mit Parametern versehen. Dadurch wird ein Projektierungsprogramm zusammengestellt. Das Prozessleitsystem 1 enthält eine Steuervorrichtung 3, der das zusammengestellte Projektierungsprogramm zugeführt wird. Die Steuervorrichtung 3 weist einen Codegenerator 4 auf, der das Projektierungsprogramm kompiliert und in ein bestimmtes Format übersetzt. Dieses Format kann von einer Automatisierungsvorrichtung 5 des Prozessleitsystems 1 verarbeitet werden. Das kompilierte Projektierungsprogramm entspricht einem Datenbaustein, in dem die zuvor zusammengestellten Funktionen, Parameter und sonstige Daten enthalten sind. Der Datenbaustein dient der Automatisierungsvorrichtung 5 zum Steuern des Prozesses. Der Datenbaustein repräsentiert dementsprechend die gewünschte Ablaufsteuerung, die durch die Automatisierungsvorrichtung 5 ausgeführt werden soll. Der Datenbaustein ist in mehrere Datenbereiche unterteilt. In den Datenbereichen sind insbesondere Daten zusammengefasst, mit denen bestimmte Teil-Funktionalitäten zum Steuern des Prozesses mittels der Automatisierungsvorrichtung ausführbar sind.

Die Automatisierungsvorrichtung 5 enthält eine Schnittstelle 6, über die sie Daten und Signale von außen empfangen und nach außen senden kann. Dazu ist die Automatisierungsvorrichtung 5 über eine Kommunikationsleitung 7 mit der Steuervorrichtung 3 verbunden. Über die Kommunikationsleitung 7 kann u. a. der kompilierte Datenbaustein, oder Teile davon, wie beispielsweise einer oder mehrere Datenbereiche, von der Steuervorrichtung 3 zu der Automatisierungsvorrichtung 5 übermittelt und von der Schnittstelle 6 empfangen werden. Ferner werden über die Kommunikationsleitung 7 zwischen der Steuervorrichtung 3 und der Automatisierungsvorrichtung 5 Informations- und Bediendienste abgewickelt, mit denen u. a. Prozesswerte und Alarme, etc., und Bedienvorgaben zum Bedienen des Prozesses ausgetauscht und übermittelt werden. Die Automatisierungsvorrichtung 5 enthält ferner eine Steuereinrichtung 8, mit der die Abläufe in der Automatisierungsvorrichtung 5 gesteuert werden. Die Automatisierungsvorrichtung 5 enthält des Weiteren einen ersten Speicherbereich 9 zum Abspeichern eines ersten Datenbausteins und einen zweiten Speicherbereich 10 zum Abspeichern eines zweiten Datenbausteins. Es können weitere Speicherbereiche für weitere Datenbausteine vorhanden sein. Die Automatisierungsvorrichtung 5 steuert mittels einem der in den Speicherbereichen 9, 10 enthaltenen Datenbausteine den Prozess. Aus bestimmten Gründen oder bei bestimmten Anlässen, wie beispielsweise bei einer Fehlersituation, bei einer Inbetriebnahme der den Prozess durchführenden Anlage, bei Wartungsarbeiten oder bei einem Optimierungsvorgang, kann die Automatisierungsvorrichtung 5 zur veränderten Steuerung des Prozesses von dem zweiten auf den ersten Datenbaustein, oder umgekehrt, umschalten. Die beschriebenen Komponenten der Automatisierungsvorrichtung 5, d. h. die Schnittstelle 6, die Steuereinrichtung 8 und die beiden Speicherbereiche 9 und 10 sind an einen Bus 11 angeschlossen, über den sie Daten und Signale übermitteln können.

Im vorliegenden Ausführungsbeispiel ist in dem zweiten Speicherbereich 10 der zweite Datenbaustein bereits abgespeichert. Mittels diesem zweiten Datenbaustein steuert die Automatisierungsvorrichtung 5 momentan den Prozess. Der zweite Datenbaustein ist daher ein momentan aktueller Datenbaustein. Der erste Speicherbereich 9 ist jetzt noch leer. In den ersten Speicherbereich 9 soll der erste Datenbaustein abgespeichert werden, der ein Projektierungsprogramm repräsentiert, dass neu mittels der Projektierungseinrichtung 2 erstellt und von dem Codegenerator 4 kompiliert wurde. Der erste Datenbaustein ist momentan in der Steuervorrichtung 3 abgespeichert. Mit dem ersten Datenbaustein soll die Automatisierungsvorrichtung 5 zukünftig den Prozess steuern. Der erste Datenbaustein ist daher ein aktualisierter Datenbaustein, der im Vergleich zu dem zweiten Datenbaustein aktualisierte Funktionen enthält, beispielsweise um den Ablauf des Prozesses zu optimieren. Die Steuervorrichtung 3 hat nunmehr in Zusammenarbeit mit der Automatisierungsvorrichtung 5 die Aufgabe den neuerstellten ersten Datenbaustein in dem ersten Speicherbereich 9 abzuspeichern.

Erfindungsgemäß wird dabei nicht der gesamte erste Datenbaustein von der Steuervorrichtung 3 über die Kommunikationsleitung 7 zu der Automatisierungsvorrichtung 5 übertragen. Es wird vielmehr zunächst überprüft, welche der Datenbereiche des ersten Datenbausteins bereits in dem im zweiten Speicherbereich 10 abgespeicherten, zweiten Datenbaustein enthalten sind. Wird festgestellt, dass wenigstens ein Datenbereich sowohl Teil des ersten als auch Teil des zweiten Datenbausteins ist, dann wird überprüft, ob es besser ist, diesen wenigstens einen Datenbereich der Automatisierungsvorrichtung 5 über die Kommunikationsleitung 7 von der Steuervorrichtung 3 zuzuführen, damit diese ihn in dem ersten Speicherbereich 9 abspeichert, oder diesen wenigstens einen Datenbereich innerhalb der Automatisierungsvorrichtung 5 von dem zweiten Speicherbereich 10 an eine bestimmte, vorgegebene Position in dem ersten Speicherbereich 9 zu kopieren.

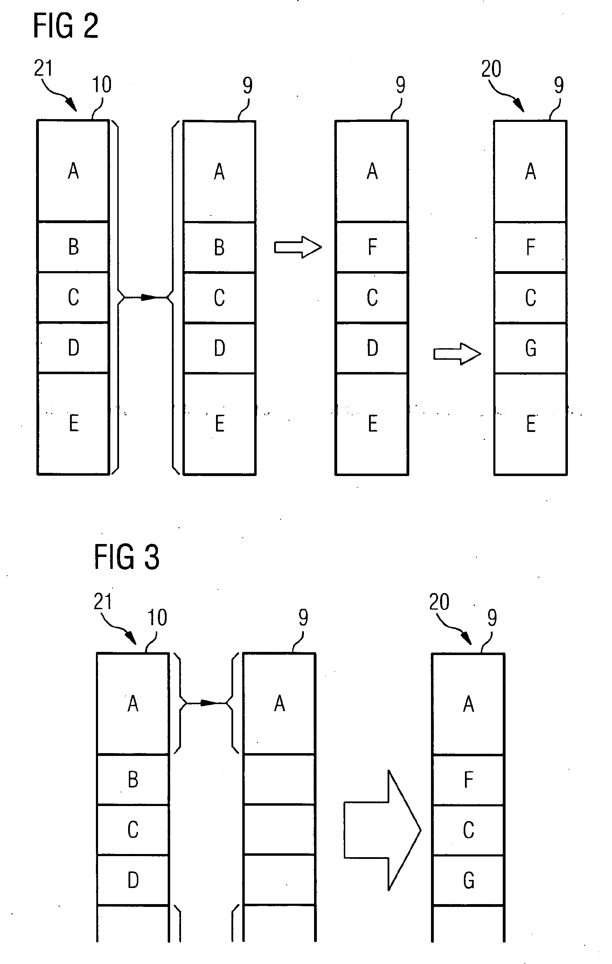

Die nachfolgend anhand der Fig. 2-5 beschriebenen Beispiele schildern mögliche Vorgehensweisen zum Abspeichern oder Zusammenstellen von Datenbereichen des ersten Datenbausteins in dem ersten Speicherbereich 9. In den Fig. 2-5 ist jeweils ganz rechts der erste Speicherbereich 9 mit dem ersten Datenbaustein dargestellt, wie er letztendlich in dem ersten Speicherbereich 9 abgespeichert oder zusammengestellt werden soll. Die Zusammenstellung der Datenbereiche in dem ersten Speicherbereich 9 gemäß der rechten Darstellung entspricht somit dem Ziel von durchzuführenden Kopier- und Übermittlungs- oder Zuführoperationen. In den Fig. 2-5 ist jeweils ganz links der zweite Speicherbereich 10 mit dem zweiten Datenbaustein dargestellt, der momentan in dem zweiten Speicherbereich 10 abgespeichert ist. Zwischen dem rechts dargestellten, ersten Speicherbereich 9 mit der Ziel-Zusammensetzung der Datenbereiche des ersten Datenbausteins und dem links dargestellten, zweiten Speicherbereich 10 mit dem vorhandenen zweiten Datenbaustein sind zur Veranschaulichung ein oder mehrere Zwischenzustände des Abspeicherns von Datenbereichen in dem ersten Speicherbereich 9 dargestellt, die sich nach durchgeführten Kopier- und/oder Übermittlungsoperationen ergeben.

Ein Datenbereich wird dabei im Folgenden durch ein Rechteck mit einer bestimmten Bezeichnung des Datenbereichs dargestellt, z. B. Datenbereich A:

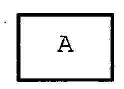

Eine Kopieroperation zum Kopieren eines oder mehrerer Datenbereiche von dem zweiten Speicherbereich 10 an eine vorgegebene Position in dem ersten Speicherbereich 9 wird durch zwei entgegengesetzt gerichtete, geschweifte Klammern repräsentiert:

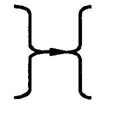

Eine Übermittlungsoperation zum Zuführen eines oder mehrerer Datenbereiche von der Steuervorrichtung 3 zu der Automatisierungsvorrichtung 5, um die übermittelten Datenbereiche in dem ersten Speicherbereich 9 an einer bestimmten Position abzuspeichern, wird durch einen Pfeil repräsentiert:

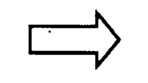

Fig. 2 zeigt ein erstes Beispiel eines Abspeicherns oder Zusammenstellens eines ersten Datenbausteins 20 in dem ersten Speicherbereich 9 der Automatisierungsvorrichtung 5. Der erste Datenbaustein 20, wie er letztendlich zusammengestellt werden soll, ist rechts dargestellt. Der erste Datenbaustein 20 enthält in der folgenden Reihenfolge von oben nach unten Datenbereiche A, F, C, G und einen Datenbereich E. Die Fig. 2 zeigt ferner links einen in dem zweiten Speicherbereich 10 abgespeicherten zweiten Datenbaustein 21. Dieser zweite Datenbaustein 21 enthält in der folgenden Reihenfolge von oben nach unten Datenbereiche A, B, C, D und den Datenbereich E. Es wird bei diesem Beispiel davon ausgegangen, dass die Datenbausteine 20 und 21 nach Art eines Indexes oder Registers aufgebaut sind. Dies bedeutet, dass gleiche Datenbereiche in den beiden Datenbausteinen 20, 21 auch an gleichen Positionen vorhanden sind. Dies vereinfacht ein von der Steuervorrichtung 3 durchzuführendes Überprüfen, ob einer der Datenbereiche des zusammenzustellenden ersten Datenbausteins 20 auch in dem zweiten Datenbaustein 21 enthalten ist. Im vorliegenden Beispiel hat die Steuervorrichtung 3 beim Überprüfen festgestellt, dass die Datenbereiche A, C und E sowohl in dem zweiten Datenbereich 21 als auch in dem zusammenzustellenden ersten Datenbereich 20 an gleichen Positionen enthalten sind.

Die Datenbereiche B und D des zweiten Datenbausteins 21 sollen in dem ersten Datenbaustein 20 durch die Datenbereiche F bzw. G ersetzt werden.

Zum Abspeichern oder Zusammenstellen des ersten Datenbausteins 20 wird in einer Kopieroperation zunächst der vollständige zweite Datenbaustein 21 von dem zweiten Speicherbereich 10 in den ersten Speicherbereich 9 kopiert. In dem ersten Speicherbereich 9 befinden sich dann in diesem ersten Zwischenzustand in dieser Reihenfolge die Datenbereiche A, B, C, D und E. In einem anschließenden Schritt wird in einer Übermittlungsoperation der Datenbereich F von der Steuervorrichtung 3 über die Kommunikationsleitung 7 der Automatisierungsvorrichtung 5 zugeführt, dort von der Schnittstelle 6 empfangen und innerhalb der Automatisierungsvorrichtung 5 zwischen den Datenbereichen A und C in dem ersten Speicherbereich 9 abgespeichert. Dabei wird der zuvor abgespeicherte Datenbereich B überschrieben. Gemäß dem zweiten Zwischenzustand sind somit in dem ersten Speicherbereich 9 in dieser Reihenfolge die Datenbereiche A, F, C, D und E abgespeichert. In einem nachfolgenden Schritt wird dann in einer weiteren Übermittlungsoperation der Datenbereich G von der Steuervorrichtung 3 über die Kommunikationsleitung 7 der Automatisierungsvorrichtung 5 zugeführt, dort von der Schnittstelle 6 empfangen und innerhalb der Automatisierungsvorrichtung 5 zwischen den Datenbereichen C und E in dem ersten Speicherbereich 9 abgespeichert. Dabei wird der zuvor abgespeicherte Datenbereich D überschrieben. In dem ersten Speicherbereich 9 sind somit in dieser Reihenfolge die Datenbereiche A, F, C, G und E abgespeichert. Diese Zusammensetzung der Datenbereiche in dem ersten Speicherbereich 9 entspricht der gewünschten Ziel-Zusammensetzung der Datenbereiche des ersten Datenbausteins 20.

Im vorliegenden Beispiel nach Fig. 2 wurde der erste Datenbaustein somit mittels einer Kopier- und zwei Übermittlungsoperationen zusammengestellt. Dabei war es nicht erforderlich, die dem ersten Datenbaustein 20 zugehörigen Datenbereiche A, C und E von der Steuervorrichtung 3 über die Kommunikationsleitung 7 der Automatisierungsvorrichtung 5 zuzuführen. Eine sich aus diesen Datenbereichen A, C und E ergebende Datenmenge muss somit nicht über die Kommunikationsleitung 7 übertragen werden. Zum Festlegen der günstigsten Kombination von Kopier- und Übermittlungsoperationen überprüft die Steuervorrichtung 3, welche Mengen an Daten jeweils in den Datenbereichen A, C und E enthalten sind, die sowohl Teil des ersten Datenbausteins 20 als auch Teil des zweiten Datenbausteins 21 sind. Es kann ebenso die Gesamtmenge an Daten dieser Datenbereiche A, C und E ermittelt werden. Zum Bestimmen, ob es günstiger ist, einen der Datenbereiche aus dem zweiten Speicherbereich 10 zu kopieren oder der Automatisierungsvorrichtung 5 über die Kommunikationsleitung 7 zuzuführen, wird eine Schwellwert-Datenmenge festgelegt. Die Schwellwert-Datenmenge berücksichtigt neben der Datenmenge eines oder mehrerer der Datenbereiche über die Kommunikationsleitung 7 zu übertragende Steuerdaten, die bei einem Steuern des Übertragens und des Zuführens des einen oder der mehreren der Datenbereiche über die Kommunikationsleitung 7 zu der Automatisierungsvorrichtung 5 anfallen. Beispielsweise fallen bei einem zweimaligen Übertragen von Datenbereichen, wie dies im zuvor anhand der Fig. 2 beschriebenen Beispiel beim aufeinander folgenden Übertragen der beiden Datenbereiche F und G in zwei Übermittlungsoperationen der Fall ist, mehr Steuerdaten an, als bei einem einmaligen Übertragen eines oder mehrerer der Datenbereiche. Die ermittelten Mengen an Daten der Datenbereiche A, C und E werden mit der Schwellwert-Datenmenge verglichen. Abhängig vom Ergebnis dieses Vergleichs wird einer oder werden mehrere der Datenbereiche von dem zweiten Speicherbereich 10 in den ersten Speicherbereich 9 kopiert, wenn die ermittelte Menge an Daten des einen oder der mehrere der Datenbereiche größer oder gleich der Schwellwert-Datenmenge ist. Ist die ermittelte Menge kleiner der Schwellwert-Datenmenge , dann wird der eine oder werden die mehreren der Datenbereiche der Automatisierungsvorrichtung zugeführt und in dem ersten Speicherbereich 9 abgespeichert. Im ersten, anhand der Fig. 2 beschriebenen Beispiel überschreitet die Datenmenge des Datenbereichs C die Schwellwert-Datenmenge. Es ist daher günstiger den Datenbereich C aus dem zweiten Speicherbereich 10 in den ersten Speicherbereich 9 zu kopieren, und damit zwei Übermittlungsoperationen zum Übermitteln der Datenbereiche F und G durchzuführen, als die Datenbereiche F, C und G gemeinsam über die Kommunikationsleitung 7 zu übertragen und dabei nur eine einzige Übermittlungsoperation zu steuern.

Um dies zu verdeutlichen, zeigt Fig. 3 ein zweites Beispiel des Abspeicherns des ersten Datenbausteins 20 in dem ersten Speicherbereich 9. Bei diesem zweiten Beispiel unterschreitet die Datenmenge des Datenbereichs C die festgelegte Schwellwert-Datenmenge. In einem ersten Schritt werden somit die Datenbereiche A und E separat an gleiche Positionen vom zweiten Speicherbereich 10 in den ersten Speicherbereich 9 kopiert. Der erste Speicherbereich 9 enthält daher im Zwischenzustand nach Fig. 3 die Datenbereiche A an oberster Position und E an unterster Position. Es ist auch möglich, statt zweier separater Kopieroperationen für die Datenbereiche A und E eine einzige Kopieroperation mit den Datenbereiche A, B, C, D und E des gesamten zweiten Datenbausteins 21 durchzuführen. In einem zweiten Schritt wird anschließend eine einzige Übermittlungsoperation mit dem Zuführen der Datenbereiche F, C und G von der Steuervorrichtung 3 zu der Automatisierungsvorrichtung 5 durchgeführt. Die zugeführten Datenbereiche F, C und G werden zwischen den Datenbereichen A und E eingefügt. Im ersten Speicherbereich 9 ist dann der vollständige erste Datenbaustein 20 abgespeichert.

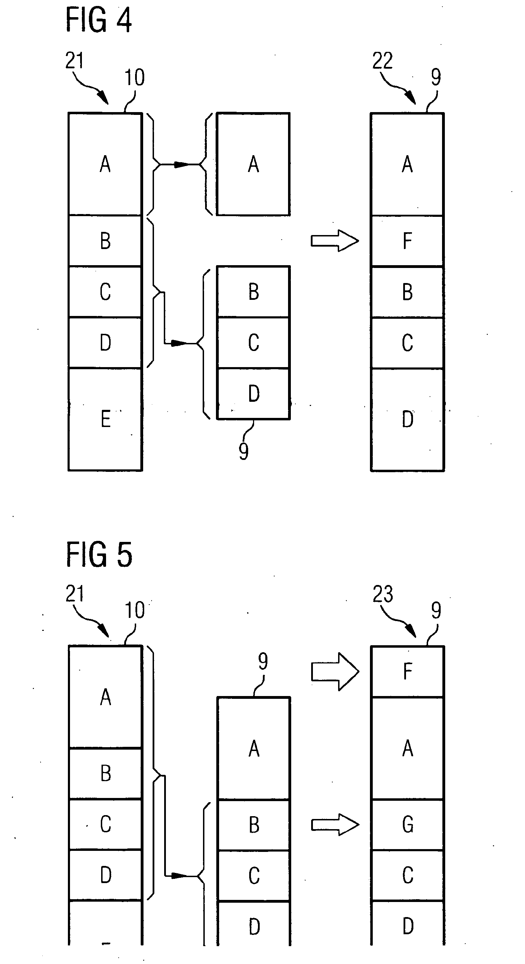

Fig. 4 zeigt ein drittes Beispiel eines Abspeicherns oder Zusammenstellens eines anderen ersten Datenbausteins 22 in dem ersten Speicherbereich 9 der Automatisierungsvorrichtung 5. Der erste Datenbaustein 22, wie er letztendlich zusammengestellt werden soll, ist rechts dargestellt. Der erste Datenbaustein 22 enthält in der folgenden Reihenfolge von oben nach unten Datenbereiche A, F, B, C und D. Die Fig. 4 zeigt ferner links den in dem zweiten Speicherbereich 10 abgespeicherten zweiten Datenbaustein 21 mit den Datenbereiche A, B, C, D und E. Es wird bei diesem Beispiel davon ausgegangen, dass die Datenbausteine 21 und 22 im Gegensatz zu den Beispielen nach Fig. 2 und 3 nicht nach Art eines Indexes oder Registers aufgebaut sind. Dies bedeutet, dass Datenbereiche in den Datenbausteinen eingefügt oder gelöscht werden können und sich angrenzende Datenbereiche dementsprechend verschieben. Gleiche Datenbereiche sind somit nicht notwendigerweise an gleichen Positionen innerhalb der Datenbausteine vorhanden.

Im vorliegenden Beispiel hat die Steuervorrichtung 3 beim Überprüfen festgestellt, dass die Datenbereiche A, B, C und D sowohl in dem zweiten Datenbereich 21 als auch in dem zusammenzustellenden ersten Datenbereich 22 enthalten sind. Der Datenbereich A ist in beiden Datenbausteinen 21 und 22 an gleichen Positionen. Die Datenbereiche B, C und D sind in dem ersten Datenbaustein-22, gegenüber dem zweiten Datenbaustein 21 nach unten verschoben, in anderen Positionen in dem ersten Datenbaustein 22 vorgesehen. Zwischen die Datenbereiche A und B des ersten Datenbausteins 22 soll ein neuer Datenbereich F eingefügt werden. Der Datenbereich E des zweiten Datenbausteins 21 wird im ersten Datenbaustein 22 nicht mehr benötigt.

Zum Abspeichern oder Zusammenstellen des ersten Datenbausteins 22 wird in einer Kopieroperation zunächst der Datenbereich A von dem zweiten Speicherbereich 10 in den ersten Speicherbereich 9 kopiert. Ferner werden die Datenbereiche B, C und D in einer Kopier- und Verschiebeoperation von dem zweiten Speicherbereich 10 an eine andere Position in dem ersten Speicherbereich 9 kopiert. In dem ersten Speicherbereich 9 befinden sich dann in einem Zwischenzustand in dieser Reihenfolge die Datenbereiche A, B, C und D, wobei zwischen den Datenbereichen A und B zunächst Speicherplatz leer bleibt. In einem anschließenden Schritt wird in einer Übermittlungsoperation der Datenbereich F von der Steuervorrichtung 3 über die Kommunikationsleitung 7 der Automatisierungsvorrichtung 5 zugeführt, dort von der Schnittstelle 6 empfangen und innerhalb der Automatisierungsvorrichtung 5 zwischen den Datenbereichen A und B in dem ersten Speicherbereich 9 abgespeichert. In dem ersten Speicherbereich 9 sind somit in dieser Reihenfolge die Datenbereiche A, F, B, C und D abgespeichert. Diese Zusammensetzung der Datenbereiche in dem ersten Speicherbereich 9 entspricht der gewünschten Ziel-Zusammensetzung der Datenbereiche des ersten Datenbausteins 22.

Fig. 5 zeigt ein viertes Beispiel eines Abspeicherns oder Zusammenstellens eines weiteren ersten Datenbausteins 23 in dem ersten Speicherbereich 9 der Automatisierungsvorrichtung 5. Der erste Datenbaustein 23, wie er letztendlich zusammengestellt werden soll, ist rechts dargestellt. Der erste Datenbaustein 23 enthält in der folgenden Reihenfolge von oben nach unten Datenbereiche F, A, G, C, D und H. Die Fig. 5 zeigt ferner links den in dem zweiten Speicherbereich 10 abgespeicherten zweiten Datenbaustein 21 mit den Datenbereiche A, B, C, D und E. Es wird bei diesem Beispiel erneut davon ausgegangen, dass Datenbereiche in den Datenbausteinen 23 und 21 eingefügt oder gelöscht werden können und sich angrenzende Datenbereiche dementsprechend verschieben. Gleiche Datenbereiche sind somit nicht notwendigerweise an gleichen Positionen innerhalb der Datenbausteine vorhanden.

Im vorliegenden vierten Beispiel hat die Steuervorrichtung 3 beim Überprüfen festgestellt, dass die Datenbereiche A, C und D sowohl in dem zweiten Datenbereich 21 als auch in dem zusammenzustellenden ersten Datenbereich 23 enthalten sind. Die Datenbereiche A, C und D sind in dem ersten Datenbaustein 23 gegenüber dem zweiten Datenbaustein 21 nach unten verschoben, in anderen Positionen in dem ersten Datenbaustein 23 vorgesehen.

Zum Abspeichern oder Zusammenstellen des ersten Datenbausteins 23 werden in einer Kopier- und Verschiebeoperation zunächst die Datenbereiche A, B, C und D von dem zweiten Speicherbereich 10 an andere Positionen in dem ersten Speicherbereich 9 kopiert. In dem ersten Speicherbereich 9 befinden sich dann in einem Zwischenzustand in dieser Reihenfolge die Datenbereiche A, B, C und D. In einem anschließenden Schritt werden in Übermittlungsoperationen die Datenbereiche F, G und H von der Steuervorrichtung 3 über die Kommunikationsleitung 7 der Automatisierungsvorrichtung 5 zugeführt, dort von der Schnittstelle 6 empfangen und innerhalb der Automatisierungsvorrichtung 5 in dem ersten Speicherbereich 9 abgespeichert. Der Datenbereich F wird in dem ersten Speicherbereich 9 an die oberste Position, der Datenbereich H an die unterste Position und der Datenbereich G zwischen den Datenbereichen A und C eingefügt. Der Datenbereich B wird dabei überschrieben. In dem ersten Speicherbereich 9 sind somit in dieser Reihenfolge die Datenbereiche F, A, G, C, D und H abgespeichert. Diese Zusammensetzung der Datenbereiche in dem ersten Speicherbereich 9 entspricht der gewünschten Ziel-Zusammensetzung der Datenbereiche des ersten Datenbausteins 23.

Bei der beschriebenen Kombination aus Kopier-, Verschiebe- und Übermittlungsoperationen wurde im vierten Beispiel davon ausgegangen, dass der Datenbereich G eine geringe Datenmenge aufweist, die derjenigen des Datenbereich B entspricht. Andernfalls wäre ein separates Kopieren des Datenbereichs A einerseits und der Datenbereiche C und D andererseits effizienter gewesen.

Gemäß der vorliegenden Erfindung ist es vorteilhafterweise möglich, die Schwellwert-Datenmenge abhängig von einem ermittelten Zustand wenigstens einer Komponente des Prozessleitsystems 1 festzulegen. Dies gilt insbesondere für die Kommunikationsleitung 7, die Steuereinrichtung 8 und/oder den Bus 11 der Automatisierungsvorrichtung 5. Insbesondere deren Auslastungen können dafür relevant sein. Dadurch kann die Schwellwert-Datenmenge besonders genau an einen aktuellen Zustand es Prozessleitsystems 1 angepasst werden. Die Schwellwert-Datenmenge wird insbesondere automatisch ermittelt. Dies kann besonders vorteilhaft adaptiv erfolgen. Dazu können vor allem konkrete Messungen des aktuellen Zustands der wenigstens einen Komponente durchgeführt werden.

Vor dem tatsächlichen Durchführen einer der Kopier- und/oder Übermittlungsoperationen zum Abspeichern des ersten Datenbausteins 20, 22 oder 23 in dem ersten Speicherbereich 9 wird hier die gewählte Kombination, oder Sequenz, der Kopier- und/oder Übermittlungsoperationen vorteilhafterweise validiert oder simuliert. Dadurch können eventuell auftretende. Fehler vor dem eigentlichen Durchführen ermittelt werden. Dann wäre es möglich, ein Zuführen des vollständigen ersten Datenbausteins mit allen seinen Datenbereichen von der Steuervorrichtung 3 zu der Automatisierungsvorrichtung 5 durchzuführen. Eine problematische Rückwirkung auf die Steuerung des Prozesses durch die im Betrieb befindliche Automatisierungsvorrichtung 5 kann somit vermieden werden.

## Patentansprüche

1. Verfahren zum Abspeichern eines ersten Datenbausteins (20; 22; 23) mit Daten zum Steuern eines technischen Prozesses in einem ersten Speicherbereich (9) einer Automatisierungsvorrichtung (5), wobei ein zweiter Datenbaustein (21) mit Daten zum Steuern des technischen Prozesses in einem zweiten Speicherbereich (10) der Automatisierungsvorrichtung (5) abgespeichert ist und der erste Datenbaustein (20; 22; 23) und der zweite Datenbaustein (21) in mehrere Datenbereiche (A, B, C, D, E, F, G, H) unterteilt sind, wobei bei dem Verfahren
- wenigstens ein Datenbereich (C, F, G, H), der Teil des ersten Datenbausteins (20; 22; 23) ist, der Automatisierungsvorrichtung (5) zugeführt und in dem ersten Speicherbereich (9) abgespeichert wird,
**dadurch gekennzeichnet, dass**
- wenigstens ein Datenbereich (A, B, C, D, E), der sowohl Teil des ersten Datenbausteins (20; 22; 23) als auch Teil des zweiten Datenbausteins (21) ist, von dem zweiten Speicherbereich (10) in den ersten Speicherbereich (9) kopiert wird und
- ermittelt wird, welche Menge an Daten in einem der Datenbereiche (A, B, C, D, E) enthalten ist, der sowohl Teil des ersten Datenbausteins (20; 22; 23) als auch Teil des zweiten Datenbausteins (21) ist, und abhängig von der ermittelten Menge an Daten der Datenbereich (A, B, C, D, E) entweder von dem zweiten Speicherbereich (10) in den ersten Speicherbereich (9) kopiert oder der Automatisierungsvorrichtung (5) zugeführt und in dem ersten Speicherbereich (9) abgespeichert wird.

2. Verfahren nach Anspruch 1, **dadurch gekennzeichnet, dass** überprüft wird, ob einer der Datenbereiche (A, B, C, D, E, F, G, H) des ersten Datenbausteins (20; 22; 23) Teil des zweiten Datenbausteins (21) ist.

3. Verfahren nach Anspruch 1 oder 2, **dadurch gekennzeichnet**, das die ermittelte Menge an Daten mit einer Schwellwert-Datenmenge verglichen und der Datenbereich (A, B, C, D, E) von dem zweiten Speicherbereich (10) in den ersten Speicherbereich (9) kopiert wird, wenn die ermittelte Menge an Daten größer ist, als die Schwellwert-Datenmenge, und der Datenbereich (C) der Automatisierungsvorrichtung (5) zugeführt und in dem ersten Speicherbereich (9) abgespeichert wird, wenn die ermittelte Menge an Daten kleiner ist, als die Schwellwert-Datenmenge.

4. Verfahren nach Anspruch 3, **dadurch gekennzeichnet, dass** die Schwellwert-Datenmenge abhängig von einem ermittelten Zustand wenigstens einer Komponente (3, 5, 7) festgelegt wird, die zum Abspeichern des ersten Datenbausteins (20; 22; 23) und/oder zum Zuführen des wenigstens einen Datenbereichs (C, F, G, H) des ersten Datenbausteins (20; 22; 23) zu der Automatisierungsvorrichtung (5) verwendet wird.

5. Verfahren nach Anspruch 4, **dadurch gekennzeichnet, dass** die Schwellwert-Datenmenge adaptiv festgelegt wird.

6. Verfahren nach einem der vorhergehenden Ansprüche, **dadurch gekennzeichnet, dass** vor dem Abspeichern des ersten Datenbausteins (20; 22; 23) in dem ersten Speicherbereich (9) der Automatisierungsvorrichtung (5) das Kopieren des wenigstens einen Datenbereichs (A, B, C, D, E), der sowohl Teil des ersten Datenbausteins (20; 22; 23) als auch Teil des zweiten Datenbausteins (21) ist, und das Zuführen des wenigstens einen Datenbereichs (A, B, C, D, E, F, G, H), der Teil des ersten Datenbausteins (20; 22; 23) ist, zu der Automatisierungsvorrichtung (5) validiert wird.

7. Steuervorrichtung (3) zum Steuern eines Abspeicherns eines ersten Datenbausteins (20; 22; 23) mit Daten zum Steuern eines technischen Prozesses in einem ersten Speicherbereich (9) einer Automatisierungsvorrichtung (5), die in einem zweiten Speicherbereich (10) einen zweiten Datenbaustein (21) mit Daten zum Steuern des technischen Prozesses enthält, wobei der erste Datenbaustein (20; 22; 23) und der zweite Datenbaustein (21) in mehrere Datenbereiche (A, B, C, D, E, F, G, H) unterteilt sind, wobei die Steuervorrichtung (3) so ausgestaltet ist, dass sie
- ein Zuführen wenigstens eines Datenbereichs (C, F, G, H), der Teil des ersten Datenbausteins (20; 22; 23) ist, zu der Automatisierungsvorrichtung (5) steuert,
**dadurch gekennzeichnet, dass**
die Steuervorrichtung (3) derart ausgestaltet ist, dass sie
- ein Kopieren wenigstens eines Datenbereichs (A, B, C, D, E), der sowohl Teil des ersten Datenbausteins (20; 22; 23) als auch Teil des zweiten Datenbausteins (21) ist, von dem zweiten Speicherbereich (10) in den ersten Speicherbereich (9) veranlasst,
- ermittelt, welche Menge an Daten in einem der Datenbereiche (A, B, C, D, E) enthalten ist, der sowohl Teil des ersten Datenbausteins (20; 22; 23) als auch Teil des zweiten Datenbausteins (21) ist, und
- abhängig von der ermittelten Menge an Daten den Datenbereich (A, B, C, D, E) entweder von dem zweiten Speicherbereich (10) in den ersten Speicherbereich (9) kopiert oder der Automatisierungsvorrichtung (5) zuführt und in dem ersten Speicherbereich (9) abspeichert.

## Claims

1. Method for storing a first data block (20; 22; 23) with data for controlling a technical process in a first memory area (9) of an automation apparatus (5), whereby a second data block (21) with data for controlling the technical process is stored in a second memory area (10) of the automation apparatus (5) and the first data block (20; 22; 23) and the second data block (21) are divided up into a number of data areas (A, B, C, D, E, F, G, H), whereby in the method
- at least one data area (C, F, G, H), which is part of the first data block (20; 22; 23), is supplied to the automation apparatus (5) and is stored in the first memory area (9), **characterised in that**
- at least one data area (A, B, C, D, E), which is both part of the first data block (20; 22; 23) and also part of the second data block (21), is copied from the second memory area (10) into the first memory area (9) and
- it is determined which quantity of data is contained in one of the data areas (A, B, C, D, E) which is both part of the first data block (20; 22; 23) and also part of the second data block (21) and, depending on the quantity of data determined (A, B, C, D, E), the data area is copied either from the second memory area (10) into the first memory area (9) or is supplied to the automation apparatus (5) and is stored in the first memory area (9).

2. Method according to claim 1, **characterised in that** a check is made as to whether one of the data areas (A, B, C, D, E, F, G, H) of the first data block (20; 22; 23) is part of the second data block (21).

3. Method according to claim 1 or 2, **characterised in that** the quantity of data determined is compared with a threshold quantity of data and the data area (A, B, C, D, E) is copied from the second memory area (10) into the first memory area (9) if the quantity of data determined is greater than the threshold quantity of data, and the data area (C) is supplied to the automation apparatus (5) and is stored in the first memory area (9) if the quantity of data determined is less than the threshold data quantity.

4. Method according to claim 3, **characterised in that** the threshold data quantity is defined as a function of a determined state of at least one component (3, 5, 7), which is used for storing the first data block (20; 22; 23) and/or for supplying the at least one data area (C, F, G, H) of the first data block (20; 22; 23) to the automation apparatus (5).

5. Method according to claim 4, **characterised in that** the threshold quantity of data is determined adaptively.

6. Method according to one of the preceding claims, **characterised in that**, before the first data block (20; 22; 23) is stored in the first memory area (9) of the automation apparatus (5), the copying of the at least one data area (A, B, C, D, E), which is both part of the first data block (20; 22; 23) and also part of the second data block (21), and the supply of the at least one data area (A, B, C, D, E, F, G, H), which is part of the first data block (20; 22; 23), to the automation apparatus (5), is validated.

7. Control apparatus (3) for controlling storage of a first data block (20; 22; 23) with data for controlling a technical process in a first memory area (9) of an automation apparatus (5), which in a second memory area (10) contains a second data block (21) with data for controlling the technical process, whereby the first data block (20; 22; 23) and the second data block (21) are subdivided into a number of data areas (A, B, C, D, E, F, G, H), whereby the control apparatus (3) is embodied so that it
- controls a supply of at least one data area (C, F, G, H), which is part of the first data block (20; 22; 23) to the automation apparatus (5),
**characterised in that**
the control apparatus (3) is embodied such that it
- causes at least one data area (A, B, C, D, E), which is both part of the first data block (20; 22; 23) and also part of the second data block (21) to be copied from the second memory area (10) into the first memory area (9),
- determines which quantity of data is contained in one of the data areas (A, B, C, D, E), which is both part of the first data block (20; 22; 23) and also part of the second data block (21), and
- depending on the quantity of data determined, copies the data area (A, B, C, D, E) either from the second memory area (10) into the first memory area (9) or supplies it to the automation apparatus (5) and stores it in the first memory area (9).

## Revendications

1. Procédé de mémorisation d'un premier module ( 20, 22, 23 ) de données, ayant des données de commande d'un processus technique, dans une première zone ( 9 ) de mémoire d'un dispositif ( 5 ) d'automatisation, un deuxième module ( 21 ) de données, ayant des données de commande du processus technique, étant mémorisé dans une deuxième zone ( 10 ) de mémoire du dispositif ( 5 ) d'automatisation et le premier module ( 20, 22, 23 ) de données et le deuxième module ( 21 ) de données sont subdivisés en plusieurs zones ( A, B, C, D, E, F, G, H ) de données, procédé dans lequel
- au moins une zone ( C, F, G, H ) de données, qui fait partie du premier module ( 20, 22, 23 ) de données, est envoyée au dispositif ( 5 ) d'automatisation et est mémorisée dans la première zone ( 9 ) de mémoire, **caractérisé en ce que**
- au moins une zone ( A, B, C, D, E ) de données, qui fait partie à la fois du premier module ( 20, 22, 23) de données et du deuxième module ( 21) de données, est copiée de la deuxième zone ( 10) de mémoire dans la première zone ( 9 ) de mémoire et
- il est déterminé quelle quantité de données est contenue dans l'une des zones ( A, B, C, D, E ) de données, qui fait partie à la fois du premier module ( 20, 22, 23 ) de données et du deuxième module ( 21 ) de données, et, en fonction de la quantité déterminée de données, la zone ( A, B, C, D, E ) de données est copiée de la deuxième zone ( 10 ) de mémoire dans la première zone ( 9 ) de mémoire ou est envoyée au dispositif ( 5 ) d'automatisation et est mémorisé dans la première zone ( 9 ) de mémoire.

2. Procédé suivant la revendication 1, **caractérisé en ce qu'**il est contrôlé si l'une des zones ( A, B, C, D, E, F, G, H ) de données du premier module ( 20, 22, 23 ) de données fait partie du deuxième module ( 21 ) de données.

3. Procédé suivant la revendication 1 ou 2, **caractérisé en ce que** la quantité déterminée de données est comparée à une quantité de données de valeur de seuil et la zone ( A, B, C, D, E ) de données est copiée de la deuxième zone ( 10 ) de mémoire dans la première zone ( 9 ) de mémoire si la quantité déterminée de données est plus grande que la quantité de valeur de seuil et la zone ( C ) de données est envoyée au dispositif ( 5 ) d'automatisation et est mémorisée dans la première zone ( 9 ) de mémoire si la quantité déterminée de données est plus petite que la quantité de données de valeur de seuil.

4. Procédé suivant la revendication 3, **caractérisé en ce que** la quantité de données de valeur de seuil est fixée en fonction d'un état déterminé d'au moins un composant ( 3, 5, 7 ) qui est utilisé pour la mémorisation du premier module ( 20, 22, 23 ) de données et/ou pour l'envoi de la au moins une zone ( C, F, G, H ) du premier module ( 20, 22, 23 ) de données au dispositif ( 5 ) d'automatisation.

5. Procédé suivant la revendication 4, **caractérisé en ce que** la quantité de données de valeur de seuil est fixée de manière adaptée.

6. Procédé suivant l'une des revendications précédentes, **caractérisé en ce qu'**avant la mémorisation du premier module ( 20, 22, 23 ) de données dans la première zone ( 9 ) de mémoire du dispositif ( 5 ) d'automatisation, la copie de la au moins une zone ( A, B, C, D, E ) de données, qui fait partie à la fois du premier module ( 20, 22, 23 ) de données et du deuxième module ( 21 ) de données, et l'envoi de la au moins une zone ( A, B, C, D, E, F, G, H ) de données, qui fait partie du premier module ( 20, 22, 23 ) de données au dispositif ( 5 ) d'automatisation, sont validées.

7. Dispositif ( 3 ) de commande pour la commande d'une mémorisation d'un premier module ( 20, 22, 23 ) de données, ayant des données de commande d'un processus technique, dans une première zone ( 9 ) de mémoire d'un dispositif ( 5 ) d'automatisation qui contient dans une deuxième zone ( 10 ) de mémoire un deuxième module ( 21 ) de données, ayant des données de commande du processus technique, dans lequel le premier module ( 20, 22, 23 ) de données et le deuxième module ( 21 ) de données sont subdivisés en plusieurs zones ( A, B, C, D, E, F, G, H ) de données, le dispositif ( 3 ) de commande étant conformé de manière à
- commander un envoi d'au moins une zone ( C, F, G, H ) de données, qui fait partie du premier module ( 20, 22, 23 ) de données, au dispositif ( 5 ) d'automatisation, **caractérisé en ce que**
- le dispositif ( 3 ) de commande est tel qu'il
- provoque un copiage d'au moins une zone ( A, B, C, D, E ) de données, qui fait partie à la fois du premier module ( 20, 22, 23 ) et du deuxième module ( 21 ) de données, de la deuxième zone ( 10 ) de mémoire dans la première zone ( 9 ) de mémoire,
- détermine la quantité qui est contenue dans l'une des zones ( A, B, C, D, E ) de données, qui fait partie à la fois du premier module ( 20, 22, 23 ) et du deuxième module ( 21 ) de données, et
- en fonction de la quantité déterminée de données, copie la zone ( A, B, C, D, E ) de données de la deuxième zone ( 10 ) de mémoire dans la première zone de mémoire ou l'envoie au dispositif ( 5 ) d'automatisation et la mémorise dans la première zone ( 9 ) de mémoire.
